# EUROPEAN PATENT APPLICATION

(11) **EP 2 492 125 A1**
(43) Date of publication of application: **29.08.2012**
(21) Application number: 09850321.2
(22) Date of filing: 15.10.2009
(51) Int. Cl.: B60K 6/12, B60T 1/10

(54) **METHOD FOR RECOVERING KINETIC ENERGY OF HYBRID ELECTRIC VEHICLES, AND ENERGY ACCUMULATOR USING COMPRESSED AIR**

(71) Applicant: Instituto Alberto Luiz De Coimbra De Pós Graduação E Pesquisa De Engenharia - Coppe/Ufrj, Rio de Janeiro - RJ Cep: 21945-979 (BR)
(72) Inventor: DE MIRANDA, Paulo Emílio, Valadão, Rio de Janeiro RJ Cep: 22631-004 (BR); TORRES, Sidney, Odocio de Almo, Rio de Janeiro RJ Cep: 21945-970 (BR)
(74) Representative: Johansson, Lars E.
(86) International application number: PCT/BR2009/000319
(87) International publication number: WO 2011/044645

(57) **Abstract**

The claimed innovation relates to an energy accumulator using compressed air for hybrid electric vehicles, which makes it possible to recover the electric energy generated from the vehicle kinetic energy, and store it using compressed air. This configuration increases the global efficiency, performance and operational reliability of the vehicle, reduces energy waste and ensures the availability and use of regenerating brakes in these conditions.

## Description

The claimed innovation relates to an energy accumulator using compressed air for hybrid electric vehicles, which makes it possible to recover the electric energy generated from the vehicle kinetic energy, and store it using compressed air. This configuration increases the global efficiency, performance and operational reliability of the vehicle, reduces energy waste and ensures the availability and use of regenerating brakes in these conditions.

### BACKGROUND OF THE INVENTION

Electric vehicles are those that use the engine (s) circuit (s) to effect traction propulsion. These can have a single source or generating electrical energy storage on board and can also work directly connected to the mains electricity supply.

Alternatively it is called hybrid electric vehicle when the vehicle has electric generating sources and electrical energy storage on board. In this case, the energy that powers the electric traction motor is from more than one source.

Thus, hybrid electric vehicles are those that use one or more electric motors for traction and more than a mechanical energy source to power these engines.

Energy sources may be liquid fuel electric generators (diesel, gasoline, alcohol or other), electric generators, fuel gas (natural gas, hydrogen, or other), solar electric generators, electric generators, wind or fuel cell.

When vehicle is in motion and does not need torque for traction, the traction motors can be used in the process of braking to reduce vehicle speed or even stop it. In this case, mechanical energy of braking comes from the operation of traction motors that act as generators, which convert part of the vehicle's kinetic energy into electrical energy, storing it on board batteries, ultra capacitors in, records of inertia, and / or other electrical energy storage device for later use.

In normal operation, traction motor of a hybrid electric vehicle generates torque to pull mechanical or electrical energy from regenerative braking.

In the first case, i.e., ongoing traction motion, the load on the electric storage battery (batteries, ultra capacitors or other devices for storing electrical energy) is partially or fully restored by sources of electrical power on board, such as , a diesel generator, gas or a fuel cell. Some configurations using the concept of operation were discussed in the patents P19904360-2, W02007071464, W0200032976 and ES2260058T.

There are hybrid vehicles with electric traction or not, using compressed air stored on board to generate mechanical power to drive a turbine, as exemplified by patent P19500927-2 US20071 and 07949. Other forms of manipulation of compressed air hybrid vehicles include the method of mechanical compression of the air, using the kinetic energy of motion of the vehicle deceleration, as described in the patent GB2428653 or a procedure in which the torque of the vehicle is enhanced by the use of compressed air stored on board to drive a pneumatic motor tracionário, as discussed in the patent DE19923451.

Under certain conditions, the vehicle is moving with considerable speed and with fully charged batteries, in which case you cannot make a useful energy eventually regenerate, preventing the use of regenerative braking of the vehicle and causing an unavoidable waste of energy.

To work around this problem, some hybrid electric vehicles using electric resistance, often located at the top of the vehicle, which consume these specific conditions the regenerated energy transforming it into heat which is dissipated by air flowing over the vehicle.

However, reject the regenerated power from kinetic movement of the vehicle with the use of electrical resistance is a highly unwise to current energy reality. A lot of energy is discarded as useless, and risks related to the large flow heat produced in these resistors.

On other vehicles, the available kinetic energy in excess is not only used, performing conventional mechanical braking, which reduces the use of onboard power and, consequently, the energy efficiency of hybrid vehicle.

### SUMMARY OF THE INVENTION

The present invention aims to describe a process for harnessing the kinetic energy of the hybrid electric vehicle which uses an energy using compressed air. This process has steps of: directing the excess regenerated power to the air compressor; transforming electrical energy into air compression, and use of compressed air obtained for different purposes.

In addition, features designed to describe an energy using compressed air aimed at increasing the use of energy produced and consumed in the vehicle, avoiding waste through the regeneration of the same kinetic energy into electrical energy.

### DESCRIPTION OF FIGURES

Figure 1 shows a basic configuration of the main components of hybrid electric vehicles for land use.
Figure 2 shows a basic configuration of the main components of hybrid electric vehicles for use, water, air, and / or space.

### DETAILED DESCRIPTION OF INVENTION

The present invention, in order to overcome the disadvantages presented by the models of hybrid cars in the prior art, has described a methodology for harnessing the kinetic energy of hybrid electric vehicles in the form of compressed air.

For this, we try to ensure the use of regenerated energy, even in situations in which the electrical energy storage (battery, ultra capacitor or other) is charged, and power consumption of the various equipment and fixtures to be shipped less than the amount of regenerated energy, characterizing the existence of an excess of electricity for which there is no use working on board.

It was thought, in this condition that the excess power regenerated by the operation of the traction electric motor acting as the electric generator is directed to drive an air compressor that converts electrical energy into such compression of air in a reservoir, accumulating thus, a portion of the vehicle's kinetic energy in the form of compressed air.

The compressed air thus obtained can be used for different purposes, such as the power of combustion engines, fuel cells, air suspension systems, steering and stabilization of position, air suspension, and drive pneumatic equipment, which includes air actuated devices on board, generating equipment for traction torque, power generating equipment and procedures for maintenance and cleaning.

Moreover, when the amount of regenerated energy generates a volume of air greater than the capacity of your use and / or onboard storage, the overhead air can be easily discarded in the environment, without adding any risk or damage.

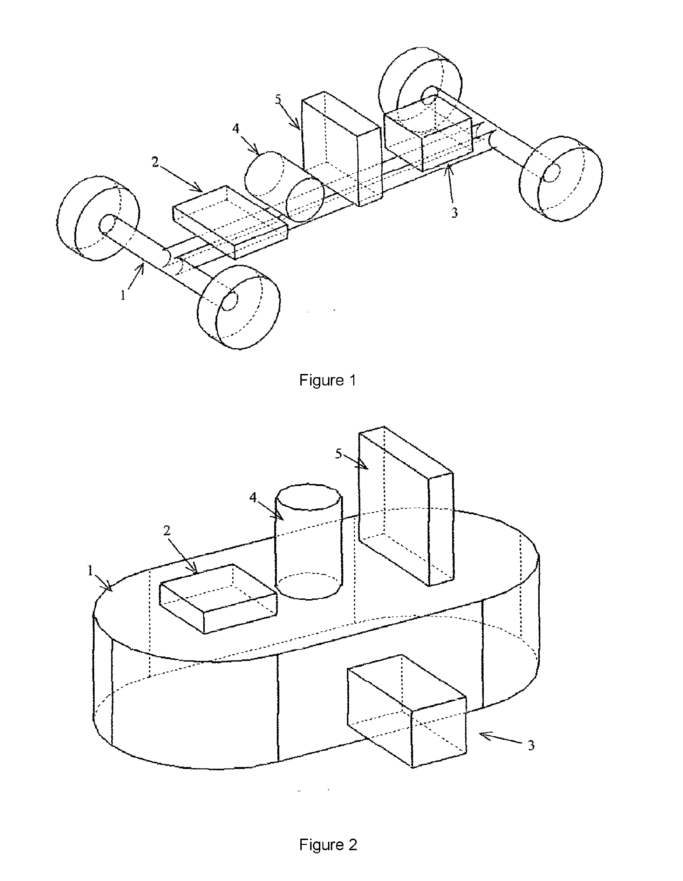

As illustrated in Figures 1 and 2, when a vehicle is in motion, with normal operating conditions (production and consumption), each time you need to stop or just reduce your speed, the electric power produced through the regeneration of kinetic energy will be directed to charge the energy accumulator 2.

If the vehicle is moving with some speed, and battery power 2 is loaded, and also if necessary stop all or part of the vehicle, the electric power regenerated by the traction electric motor 3 will be consumed in an air compressor 4 by storing a portion of that energy in the form of compressed air, which may have future use (with normal operating conditions) to drive pneumatic equipment possible, to be used in the correct operation of fuel cell for use in air suspension, for targeting and stabilization of position and / or to fuel combustion engines.

It is worth noting that when the vehicle operates in a normal and requires no action braking load on the electrical energy accumulator 2 is maintained by an alternative energy source 5.

## Claims

1. PROCESS FOR THE DEVELOPMENT OF KINETIC ENERGY OF HYBRID ELECTRIC VEHICLES **characterized by** an energy using compressed air and have the following steps:
a) directing the excess regenerated power to the air compressor;
b) transformation of electrical energy into the compressed air;
c) use of compressed air obtained for different purposes.

2. PROCESS according to claim 1, **characterized by** the ways of using compressed air preferably to fed combustion engines, fuel cells, air suspension systems, steering and stabilization of position, air suspension, and activation of pneumatic equipment.

3. PROCESS according to claim 1, **characterized by** having his concept applies so versatile in land vehicles, water, air, and / or space.

4. PROCESS according to claim 1, **characterized by** allowing the excess air can be easily discarded to the environment when there is regeneration of excess energy.

5. PROCESS according to claim 1, **characterized by** enabling the stored compressed air used preferably in guidance systems of position and stabilize the vehicle and air suspension; power fuel cell; power of combustion engines; drive pneumatic equipment on board; and cleaning and maintaining the vehicle.

6. PROCESS according to claims 1 to 5, **characterized by** enabling the pneumatic device operating the vehicle and electric power generators.

7. ENERGY STORAGE USING COMPRESSED AIR, **characterized by** being used in hybrid electric vehicles (1), with basic composition containing an energy accumulator (2), traction electric motors (3) and air compressors (4).

8. ENERGY STORAGE, in accordance with claim 7, **characterized by** increasing use of energy produced and consumed in the vehicle, avoiding the waste of energy generated through the regeneration of kinetic energy into electrical energy.

9. ENERGY STORAGE, in accordance with claims 7 and 8, **characterized by** avoiding the risk associated with the burning of excess energy regenerated in the vehicle through the electrical resistance.

10. ENERGY STORAGE, in accordance with claims 7 and 8, **characterized by** having his concept applies so versatile in land vehicles, water, air or space.

11. ENERGY STORAGE, in accordance with claims 7 and 8, **characterized by** ensuring that the vehicle has regenerative brakes always active at times of application, increasing reliability and safety of the vehicle.
